# EUROPEAN PATENT SPECIFICATION

(11) **EP 1 631 971 B1**
(45) Date of publication and mention of the grant of the patent: **21.01.2009**
(21) Application number: 04750368.5
(22) Date of filing: 20.04.2004
(51) Int. Cl.: H01B 1/24

(54) **ELECTRICALLY CONDUCTIVE COMPOSITIONS AND METHOD OF MANUFACTURE THEREOF**
ELEKTRISCH LEITFÄHIGE ZUSAMMENSETZUNG UND METHODE ZU DEREN HERSTELLUNG
COMPOSITIONS ELECTRIQUEMENT CONDUCTRICES ET PROCEDE DE PRODUCTION DE CES COMPOSITIONS

(30) Priority: 22.05.2003 US 472618 P; 09.03.2004 US 797298
(43) Date of publication of application: 08.03.2006
(73) Proprietor: Sabic Innovative Plastics IP B.V., 4612 PX Bergen op Zoom (NL)
(72) Inventor: ELKOVITCH, Mark, D., Selkirk, NY 12158 (US)
(74) Representative: Bublak, Wolfgang
(86) International application number: PCT/US2004/012146
(87) International publication number: WO 2004/107360

(56) References cited:
- WO-A-97/15935
- WO-A-02/076724
- US-A- 5 643 502

## Description

### CROSS-REFERENCE TO RELATED APPLICATION

This application claims benefit to U.S. Provisional Patent Application Serial Number 60/472,618 filed May 22, 2003, which is fully incorporated herein by reference.

### BACKGOUND

This disclosure relates to electrically conductive compositions and methods of manufacture thereof.

Articles made from polymeric resins are commonly utilized in material-handling and electronic devices such as packaging film, chip carriers, computers, printers and photocopier components where electrostatic dissipation or electromagnetic shielding are important requirements. Electrostatic dissipation (hereinafter ESD) is defined as the transfer of electrostatic charge between bodies at different potentials by direct contact or by an induced electrostatic field. Electromagnetic shielding (hereinafter EM shielding) effectiveness is defined as the ratio (in decibels) of the proportion of an electromagnetic field incident upon the shield that is transmitted through it. As electronic devices become smaller and faster, their sensitivity to electrostatic charges is increased and hence it is generally desirable to utilize polymeric resins that have been modified to provide improved electrostatically dissipative properties. In a similar manner, it is desirable to modify polymeric resins so that they can provide improved electromagnetic shielding while simultaneously retaining some or all of the advantageous mechanical properties of the polymeric resins.

Conductive fillers such as graphite fibers derived from pitch and polyacrylonitrile having diameters larger than 2 micrometers are often incorporated into polymeric resins to improve the electrical properties and achieve ESD and EM shielding. However, because of the large size of these graphite fibers, the incorporation of such fibers generally causes a decrease in the mechanical properties such as impact. There accordingly remains a need in the art for conductive polymeric compositions, which while providing adequate ESD and EM shielding, can retain their mechanical properties.

### FIGURES

Figure 1 is a depiction of the various ways in which the graphene sheets can roll up to produce nanotubes of helical structures. The helical structures may be either of the zigzag or the armchair configuration; and
Figure 2 is a graphical representation depicting reductions in the specific volume resistivity for compositions containing magnesium oxide and titanium oxide when subjected to mixing for different time intervals.

### SUMMARY OF THE INVENTION

An electrically conductive composition comprises a polymeric resin; an electrically non-conducting nanosized dispersion agent; and carbon nanotubes, wherein the composition has an electrical volume resistivity less than or equal to 10⁸ ohm-cm, and a notched Izod impact strength greater than or equal to 5 kilojoules/square meter.

In another embodiment, a method for manufacturing an electrically conductive composition comprises blending a polymeric resin, a nanosized dispersion agent and single wall carbon nanotubes, wherein the composition has an electrical volume resistivity less than or equal to 10⁸ ohm-cm, and a notched Izod impact strength greater than or equal to 5 kilojoules/square meter.

### DETAILED DESCRIPTION OF THE INVENTION

Disclosed herein are compositions comprising polymeric resin, electrically non-conducting nanosized dispersion agents and carbon nanotubes that have a bulk volume resistivity less than or equal to about 10⁸ ohm-cm, while displaying impact properties greater than or equal to about 5 kilojoules/square meter and a Class A surface finish. The nanosized dispersion agents promote the dispersion of the carbon nanotubes within the polymeric resin with minimal degradation to the aspect ratio of the carbon nanotubes. This permits the use of smaller amounts of carbon nanotubes in the composition while obtaining levels of electrical conductivity comparable with the use of larger quantities of carbon nanotubes having smaller aspect ratios. The use of smaller amounts of carbon nanotubes allows for the retention of intrinsic properties of the polymeric resin such as ductility, flexibility, impact strength, and the like.

In one embodiment, the composition has a surface resistivity greater than or equal to 10⁸ ohm/square (ohm/sq) while having a bulk volume resistivity less than or equal to 10⁸ ohm-cm, while displaying impact properties greater than or equal to about 5 kilojoules/square meter and a Class A surface finish. Such compositions can be advantageously utilized in computers, electronic goods, semi-conductor components, circuit boards, or the like which need to be protected from electrostatic dissipation. They may also be used advantageously in automotive body panels both for interior and exterior components of automobiles that can be electrostatically painted if desired.

The polymeric resin used in the conductive compositions may be selected from a wide variety of thermoplastic resins, blend of thermoplastic resins, or blends of thermoplastic resins with thermosetting resins. The polymeric resin may also be a blend of polymers, copolymers, terpolymers, or combinations comprising at least one of the foregoing polymeric resins. Specific, but non-limiting examples of thermoplastic resins include polyacetals, polyacrylics, polycarbonates, polystyrenes, polyesters, polyamides, polyamideimides, polyarylates, polyurethanes, polyarylsulfones, polyethersulfones, polyarylene sulfides, polyvinyl chlorides, polysulfones, polyetherimides, polytetrafluoroethylenes, polyetherketones, polyether etherketones, and combinations comprising at least one of the foregoing polymeric resins.

Specific non-limiting examples of blends of thermoplastic resins include acrylonitrile-butadiene-styrene/nylon, polycarbonate/acrylonitrile-butadiene-styrene, polyphenylene ether/polystyrene, polyphenylene ether/polyamide, polycarbonate/polyester, polyphenylene ether/polyolefin, and combinations comprising at least one of the foregoing blends of thermoplastic resins.

The polymeric resin is generally used in amounts of 5 to 99.999 weight percent (wt%). Within this range, it is generally desirable use the polymeric resin or resinous blend in an amount of greater than or equal to 10 wt%, preferably greater or equal to 30 wt%, and more preferably greater than or equal to 50 wt% of the total weight of the composition. The polymeric resins or resinous blends are furthermore generally used in amounts less than or equal to 99.99 wt%, preferably less than or equal to 99.5 wt%, more preferably less than or equal to 99.3 wt% of the total weight of the composition.

The carbon nanotubes used in the composition may be single wall carbon nanotubes (SWNTs), multiwall carbon nanotubes (MWNTs) or vapor grown carbon fibers (VGCF). Single wall carbon nanotubes used in the composition may be produced by laser-evaporation of graphite or carbon arc synthesis. These SWNTs generally have a single wall comprising a graphene sheet with outer diameters of 0.7 to 2.4 nanometers (nm). SWNTs having aspect ratios of greater than or equal to about 5, preferably greater than or equal to 100, more preferably greater than or equal to 1000 are generally utilized in the compositions. While the SWNTs are generally closed structures having hemispherical caps at each end of the respective tubes, it is envisioned that SWNTs having a single open end or both open ends may also be used. The SWNTs generally comprise a central portion, which is hollow, but may be filled with amorphous carbon.

In one embodiment, the SWNTs may exist in the form of rope-like-aggregates. These aggregates are commonly termed "ropes" and are formed as a result of Van der Waal's forces between the individual carbon nanotubes. The individual nanotubes in the ropes may slide against one another and rearrange themselves within the rope in order to minimize the free energy. Ropes generally having between 10 and 10⁵ nanotubes may be used in the compositions. Within this range it is generally desirable to have ropes having greater than or equal to 100, preferably greater than or equal to 500 nanotubes. Also desirable are ropes having less than or equal to 10⁴ nanotubes, preferably less than or equal to 5,000 nanotubes. It is generally desirable for the SWNTs to have an inherent thermal conductivity of at least 2000 Watts per meter Kelvin (W/m-K) and an inherent electrical conductivity of 10⁴ Siemens/centimeter (S/cm). It is also generally desirable for the SWNTs to have a tensile strength of at least 80 gigapascals (GPa) and a stiffness of at least 0.5 tarapascals (TPa).

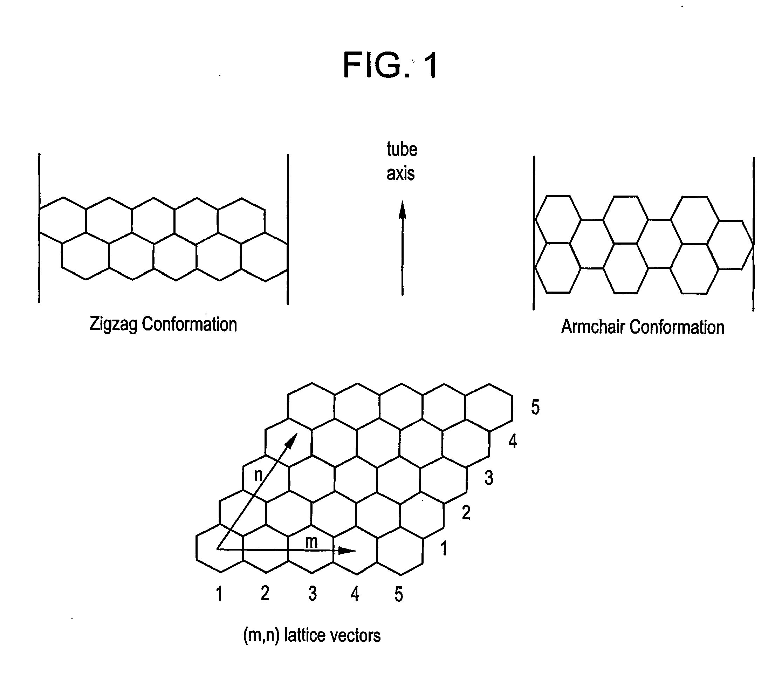

In another embodiment, the SWNTs may comprise a mixture of metallic nanotubes and semi-conducting nanotubes. Metallic nanotubes are those that display electrical characteristics similar to metals, while the semi-conducting nanotubes are those, which are electrically semi-conducting. In general the manner in which the graphene sheet is rolled up produces nanotubes of various helical structures. These structures as well as the lattice vectors is shown in Figure 1. As may be seen from the Figure 1, the integer lattice vectors m and n are added together and the tail and head of the resulting vector are placed on top of each other in the final nanotube structure. Zigzag nanotubes have (n,0) lattice vector values, while armchair nanotubes have (n,n) lattice vector values. Zigzag and armchair nanotubes constitute the two possible achiral confirmations, all other (m,n) lattice vector values yield chiral nanotubes. In order to minimize the quantity of SWNTs utilized in the composition, it is generally desirable to have the metallic nanotubes constitute as large a fraction of the total amount of SWNTs used in the composition. It is generally desirable for the SWNTs used in the composition to comprise metallic nanotubes in an amount of greater than or equal to 1 wt%, preferably greater than or equal to 20 wt%, more preferably greater than or equal to 30 wt%, even more preferably greater than or equal to 50 wt%, and most preferably greater than or equal to 99.9 wt% of the total weight of the SWNTs. In certain situations it may be is generally desirable for the SWNTs used in the composition to comprise semi-conducting nanotubes in an amount of greater than or equal to 1 wt%, preferably greater than or equal to 20 wt%, more preferably greater than or equal to 30 wt%, even more preferably greater than or equal to 50 wt%, and most preferably greater than or equal to 99.9 wt% of the total weight of the SWNTs.

SWNTs are generally used in amounts of 0.001 to 50 wt% of the total weight of the composition when desirable. Within this range, SWNTs are generally used in amounts greater than or equal to 0.25 wt%, preferably greater or equal to 0.5 wt%, more preferably greater than or equal to 1 wt% of the total weight of the composition. SWNTs are furthermore generally used in amounts less than or equal to 30 wt%, preferably less than or equal to about 10 wt%, more preferably less than or equal to 5 wt% of the total weight of the composition.

MWNTs derived from processes such as laser ablation and carbon arc synthesis may also be used in the compositions. MWNTs have at least two graphene layers bound around an inner hollow core. Hemispherical caps generally close both ends of the MWNTs, but it may desirable to use MWNTs having only one hemispherical cap or MWNTs, which are devoid of both caps. MWNTs generally have diameters of 2 to 50 nm. Within this range it is generally desirable to use MWNTs having diameters less than or equal to 40, preferably less than or equal to 30, and more preferably less than or equal to 20 nm. When MWNTs are used it is preferred to have an average aspect ratio greater than or equal to 5, preferably greater than or equal to 100, more preferably greater than or equal to 1000.

MWNTs are generally used in amounts of 0.001 to 50 wt% of the total weight of the composition when desirable. Within this range, MWNTs are generally used in amounts greater than or equal to 0.25 wt%, preferably greater or equal to 0.5 wt%, more preferably greater than or equal to 1 wt% of the total weight of the composition. MWNTs are furthermore generally used in amounts less than or equal to 30 wt%, preferably less than or equal to 10 wt%, more preferably less than or equal to 5 wt% of the total weight of the composition.

Other conductive fillers such as vapor grown carbon fibers, carbon black, conductive metallic fillers, solid non-metallic, conductive fillers, or the like, or combinations comprising at least one of the foregoing may optionally be used in the compositions. Vapor grown carbon fibers or small graphitic or partially graphitic carbon fibers, also referred to as vapor grown carbon fibers (VGCF), having diameters of 3.5 to 2000 nanometers (nm) and an aspect ratio greater than or equal to 5 may also be used. When VGCF are used, diameters of 3.5 to 500 nm are preferred, with diameters of 3.5 to 100 nm being more preferred, and diameters of 3.5 to 50 nm most preferred. It is also preferable to have average aspect ratios greater than or equal to 100 and more preferably greater than or equal to 1000. Representative VGCF are described in, for example, U.S. Patent Nos. 4,565,684 and 5,024,818 to Tibbetts et al.; 4,572,813 to Arakawa; 4,663,230 and 5,165,909 to Tennent; 4,816,289 to Komatsu et al.; 4,876,078 to Arakawa et al.; 5,589,152 to Tennent et al.; and 5,591,382 to Nahass et al.

VGCF are generally used in amounts of 0.001 to 50 wt% of the total weight of the composition when desirable. Within this range, VGCF are generally used in amounts greater than or equal to 0.25 wt%, preferably greater or equal to 0.5 wt%, more preferably greater than or equal to 1 wt% of the total weight of the composition. VGCF are furthermore generally used in amounts less than or equal to 30 wt%, preferably less than or equal to 10 wt%, more preferably less than or equal to 5 wt% of the total weight of the composition.

In one embodiment, the carbon nanotubes used in the composition may comprise impurities. Impurities are generally obtained as a result of the catalysts used in the synthesis of the carbon nanotubes as well from other non- carbon nanotube carbonaceous by-products of the synthesis. Catalytic impurities are generally metals such as cobalt, iron, yttrium, cadmium, copper, nickel, oxides of metals such as ferric oxide, aluminum oxide, silicon dioxide, or the like, or combinations comprising at least one of the foregoing impurities. Carbonaceous by-products of the reaction are generally soot, amorphous carbon, coke, multiwall nanotubes or the like, or combinations comprising at least one of the foregoing carbonaceous by-products. In general, the single wall carbon nanotubes may contain metals such as cobalt, iron, yttrium, cadmium, copper, nickel, oxides of metals such as ferric oxide, aluminum oxide, silicon dioxide, carbonaceous reaction by-products such as soot, amorphous carbon, coke, multiwall nanotubes, or the like, as impurities.

In general, the carbon nanotubes used in the composition may comprise an amount of 1 to 80 wt% impurities. Within this range, the carbon nanotubes may have an impurity content greater than or equal to 5, preferably greater than or equal to 7, and more preferably greater than or equal to 8 wt%, of the total weight of the carbon nanotubes. Also desirable within this range, is an impurity content of less than of equal to 50, preferably less than or equal to 45, and more preferably less than or equal to 40 wt% of the total weight of the carbon nanotubes.

The carbon nanotubes utilized in the composition may also be derivatized with functional groups to improve compatibility and facilitate the mixing with the polymeric resin. The carbon nanotubes may be functionalized on either the graphene sheet constituting the sidewall, a hemispherical cap or on both the side wall as well as the hemispherical endcap. Functionalized carbon nanotubes having the formula (I)

[Cₙ H_{L}⁆ Rₘ (I)

wherein n is an integer, L is a number less than 0.1n, m is a number less than 0.5n, and wherein each of R is the same and is selected from -SO₃H, NH₂, -OH, -C(OH)R', -CHO, -CN, -C(O)Cl, -C(O)SH, -C(O)OR', -SR', -SiR₃', -Si(OR')_{y}R'_{(3-y)}, -R", -AlR₂', halide, ethylenically unsaturated functionalities, epoxide functionalities, or the like, wherein y is an integer equal to or less than 3, R' is hydrogen, alkyl, aryl, cycloalkyl, araalkyl, cycloaryl, poly(alkylether), or the like and R" is fluoroalkyl, fluoroaryl, fluorocycloalkyl, fluoroaralkyl, cycloaryl, or the like. The carbon atoms, Cₙ, are surface carbons of a carbon nanotube. In both uniformly and non-uniformly substituted carbon nanotubes, the surface atoms Cₙ are reacted.

Non-uniformly substituted carbon nanotubes may also be used in the composition. These include compositions of the formula (I) shown above wherein n, L, m, R and the SWNT itself are as defined above, provided that each of R does not contain oxygen, or, if each of R is an oxygen-containing group, COOH is not present.

Also included in the invention are functionalized nanotubes having the formula (II)

[Cₙ H_{L}⁆⁅R" -R]ₘ (II)

where n, L, m, R' and R have the same meaning as above. Most carbon atoms in the surface layer of a carbon nanotube are basal plane carbons. Basal plane carbons are relatively inert to chemical attack. At defect sites, where, for example, the graphitic plane fails to extend fully around the carbon nanotube, there are carbon atoms analogous to the edge carbon atoms of a graphite plane. The edge carbons are reactive and must contain some heteroatom or group to satisfy carbon valency.

The substituted carbon nanotubes described above may advantageously be further functionalized. Such compositions include compositions of the formula (III)

[Cₙ H_{L}⁆Aₘ (III)

where n, L and m are as described above, A is selected from -OY, -NHY, -CR'₂-OY, - C(O)OY, -C(O)NR'Y, -C(O)SY, or -C(O)Y, wherein Y is an appropriate functional group of a protein, a peptide, an enzyme, an antibody, a nucleotide, an oligonucleotide, an antigen, or an enzyme substrate, enzyme inhibitor or the transition state analog of an enzyme substrate or is selected from -R'OH, -R'NH₂, -R'SH, - R'CHO, -R'CN, -R'X, -R'SiR'₃ , -RSi-(OR')_{y}-R'_{(3-y)}, -R' Si-(O-SiR'₂)-OR', -R'-R", -R'-NCO, (C₂H₄ O)_{w}Y, -(C₃H₆O)_{w}H, -(C₂H₄O)_{w}R', -(C₃H₆O)_{w}R' and R", wherein w is an integer greater than one and less than 200.

The functional carbon nanotubes of structure (II) may also be functionalized to produce compositions having the formula (IV)

[Cₙ HL⁆⁅R'-A]ₘ (IV)

where n, L, m, R' and A are as defined above.

The compositions of the invention also include carbon nanotubes upon which certain cyclic compounds are adsorbed. These include compositions of matter of the formula (V)

[Cₙ H_{L}⁆⁅X-Rₐ]ₘ (V)

where n is an integer, L is a number less than 0.1n, m is less than 0. 5n, a is zero or a number less than 10, X is a polynuclear aromatic, polyheteronuclear aromatic or metallopolyheteronuclear aromatic moiety and R is as recited above. Preferred cyclic compounds are planar macrocycles such as re porphyrins and phthalocyanines.

The adsorbed cyclic compounds may be functionalized. Such compositions include compounds of the formula (VI)

[Cₙ H_{L}⁆⁅X-Aₐ ]ₘ (VI)

where m, n, L, a, X and A are as defined above and the carbons are on the SWNT.

Without being bound to a particular theory, the functionalized carbon nanotubes are better dispersed into polymeric resins because the modified surface properties may render the carbon nanotube more compatible with the polymeric resin, or, because the modified functional groups (particularly hydroxyl or amine groups) are bonded directly to the polymeric resin as terminal groups. In this way, polymeric resins such as polycarbonates, polyamides, polyesters, polyetherimides, or the like, bond directly to the carbon nanotubes, thus making the carbon nanotubes easier to disperse with improved adherence to the polymeric resin.

Functional groups may generally be introduced onto the outer surface of the carbon nanotubes by contacting the carbon nanotubes with a strong oxidizing agent for a period of time sufficient to oxidize the surface of the carbon nanotubes and further contacting the carbon nanotubes with a reactant suitable for adding a functional group to the oxidized surface. Preferred oxidizing agents are comprised of a solution of an alkali metal chlorate in a strong acid. Preferred alkali metal chlorates are sodium chlorate or potassium chlorate. A preferred strong acid used is sulfuric acid. Periods of time sufficient for oxidation are 0.5 hours to 24 hours.

Carbon black may also be optionally used, preferred carbon blacks are those having average particle sizes less than 200 nm, preferably less than 100 nm, more preferably less than 50 nm. Preferred conductive carbon blacks may also have surface areas greater than 200 square meter per gram (m²/g), preferably greater than 400 m²/g, yet more preferably greater than 1000 m²/g. Preferred conductive carbon blacks may have a pore volume (dibutyl phthalate absorption) greater than 40 cubic centimeters per hundred grams (cm³/100g), preferably greater than 100 cm³/100g, more preferably greater than 150 cm³/100g. Exemplary carbon blacks include the carbon black commercially available from Columbian Chemicals under the trade name Conductex®; the acetylene black available from Chevron Chemical, under the trade names S.C.F. (Super Conductive Furnace) and E.C.F. (Electric Conductive Furnace); the carbon blacks available from Cabot Corp. under the trade names Vulcan XC72 and Black Pearls; and the carbon blacks commercially available from Akzo Co. Ltd under the trade names Ketjen Black EC 300 and EC 600. Preferred conductive carbon blacks may be used in amounts from 2 wt% to 25 wt% based on the total weight of the composition.

Solid conductive metallic fillers may also optionally be used in the conductive compositions. These may be electrically conductive metals or alloys that do not melt under conditions used in incorporating them into the polymeric resin, and fabricating finished articles therefrom. Metals such as aluminum, copper, magnesium, chromium, tin, nickel, silver, iron, titanium, and mixtures comprising any one of the foregoing metals can be incorporated into the polymeric resin as conductive fillers. Physical mixtures and true alloys such as stainless steels, bronzes, and the like, may also serve as conductive filler particles. In addition, a few intermetallic chemical compounds such as borides, carbides, and the like, of these metals, (e.g., titanium diboride) may also serve as conductive filler particles. Solid non-metallic, conductive filler particles such as tin-oxide, indium tin oxide, and the like may also optionally be added to render the polymeric resin conductive. The solid metallic and non-metallic conductive fillers may exist in the form of powder, drawn wires, strands, fibers, tubes, nanotubes, flakes, laminates, platelets, ellipsoids, discs, and other commercially available geometries commonly known in the art.

Non-conductive, non-metallic fillers that have been coated over a substantial portion of their surface with a coherent layer of solid conductive metal may also optionally be used in the conductive compositions. The non-conductive, non-metallic fillers are commonly referred to as substrates, and substrates coated with a layer of solid conductive metal may be referred to as "metal coated fillers". Typical conductive metals such as aluminum, copper, magnesium, chromium, tin, nickel, silver, iron, titanium, and mixtures comprising any one of the foregoing metals may be used to coat the substrates. Examples of substrates are well known in the art and include those described in "Plastic Additives Handbook, 5th Edition" Hans Zweifel, Ed, Carl Hanser Verlag Publishers, Munich, 2001. Non-limiting examples of such substrates include silica powder, such as fused silica and crystalline silica, boron-nitride powder, boron-silicate powders, alumina, magnesium oxide (or magnesia), wollastonite, including surface-treated wollastonite, calcium sulfate (as its anhydride, dihydrate or trihydrate), calcium carbonate, including chalk, limestone, marble and synthetic, precipitated calcium carbonates, generally in the form of a ground particulates, talc, including fibrous, modular, needle shaped, and lamellar talc, glass spheres, both hollow and solid, kaolin, including hard, soft, calcined kaolin, and kaolin comprising various coatings known in the art to facilitate compatibility with the polymeric matrix resin, mica, feldspar, silicate spheres, flue dust, cenospheres, fillite, aluminosilicate (armospheres), natural silica sand, quartz, quartzite, perlite, tripoli, diatomaceous earth, synthetic silica, and mixtures comprising any one of the foregoing. All of the above substrates may be coated with a layer of metallic material for use in the conductive compositions.

Regardless of the exact size, shape and composition of the solid metallic and non-metallic conductive filler particles, they may be dispersed into the polymeric resin at loadings of 0.001 to 50 wt% of the total weight of the composition when desired. Within this range it is generally desirable to have the solid metallic and non-metallic conductive filler particles in an amount of greater than or equal to 1 wt%, preferably greater than or equal to 1.5 wt% and more preferably greater than or equal to 2 wt% of the total weight of the composition. The loadings of said solid metallic and non-metallic conductive filler particles may be less than or equal to 40 wt%, preferably less than or equal to 30 wt%, more preferably less than or equal to 25 wt% of the total weight of the composition.

Nanosized dispersion agents are generally used in the composition in order to facilitate the dispersion of the carbon nanotubes in the polymeric resin. The nanosized dispersion agents are electrically non-conducting. The nanosized dispersion agents are generally ceramic particles such as metal oxides, highly crosslinked silicones, polyhedral oligomeric silsesquioxanes (POSS) macromers, metal carbides, nanoclays and the like, which have maximum particle sizes less than or equal to 1200 nm. In general it is desirable to use nanosized dispersion agents wherein the particle sizes are less than or equal to 500, preferably less than or equal to 200, preferably less than or equal to 100, and more preferably less than or equal to 40 nanometers. In general, it is desirable to have at least 90 wt% of the nanosized dispersion agents having a particle size less than or equal to 500 nm, at least 80 wt% less than or equal to 200 nm and more preferably at least 50 wt% less than or equal to 100 nm.

The nanosized dispersion particles may have either smooth or rough surfaces. In one embodiment, it is generally desirable for the nanosized particles to have smooth surfaces in order to behave as molecular ball bearings. Without being limited by theory, it is believed that the molecular ball bearings facilitate the dispersion of the carbon nanotubes by inserting themselves between the carbon nanotubes and allowing the nanotubes to slide apart.

Nanosized metal oxides that may be used in the compositions are metal oxides of alkali earth metals, alkaline earth metals, transition metals and other commonly used metals. Suitable examples of metal oxides are calcium oxide, cerium oxide, magnesium oxide, titanium oxide, zinc oxide, silicon oxide, copper oxide, aluminum oxide, or the like, or combinations comprising at least one of the foregoing metal oxides. Nanosized metal carbides such as silicon carbide, titanium carbide, tungsten carbide, iron carbide, or the like, or combinations comprising at least one of the foregoing metal carbides may also be used in the compositions. The metal oxides and carbides are generally particles having surface areas in an amount of 1 to 1000 m²/gm. Within this range it is generally desirable for the metal oxides and carbides to have surface areas greater than or equal to 5 square meter/gram (m²/gm), preferably greater than or equal to 10 m²/gm, and more preferably greater than or equal to 15 m²/gm. Also desirable within this range is a surface area less than or equal to 950 m²/gm, preferably less than or equal to 900 m²/gm, and more preferably less than or equal to 875 m²/gm.

It is generally desirable for the nanosized metal oxide and carbide particles to have bulk densities in an amount of 0.2 to 2.5 grams per cubic centimeter; true densities in an amount of 3 to 7 grams per cubic centimeter and an average pore diameter of 10 to 250 angstroms.

Commercially available examples of nanosized metal oxides are NANOACTIVE^{™} calcium oxide, NANOACTIVE^{™} calcium oxide plus, NANOACTIVE^{™} cerium oxide, NANOACTIVE^{™} magnesium oxide, NANOACITVE^{™} magnesium oxide plus, NANOACTIVE^{™} titanium oxide, NANOACTIVE^{™} zinc oxide, NANOACTIVE^{™} silicon oxide, NANOACTIVE^{™} copper oxide, NANOACTIVE^{™} aluminum oxide, NANOACTIVE^{™} aluminum oxide plus, all commercially available from NanoScale Materials Incorporated. Commercially available examples of nanosized metal carbides are titanium carbonitride, silicon carbide, silicon carbide-silicon nitride, and tungsten carbide all commercially available from Pred Materials International Incorporated.

Nanoclays (nanosized clays) may also be used in the compositions to facilitate the dispersion of the carbon nanotubes. Nanoclays are generally plate-like materials, the clay mineral being generally selected from smectite, vermiculite and halloysite clays. The smectite clay in turn can be selected from montmorillonite, saponite, beidellite, nontrite, hectorite or the like, or combinations comprising at least one of the foregoing clays. A preferred clay mineral is the montmorillonite clay, a layered alumino-silicate. The nanoclay platelets generally have a thickness of 3 to 3000 angstroms and a size in the planar direction ranging of 0.01 micron to 100 micrometers. The aspect ratio of the nanoclays is generally of the order of 10 to 10,000. The respective clay platelets are separated by a gallery, i.e., a space between parallel layers of clay platelets containing various ions holding the platelets together. One such material is CLOISITE^{®}10A commercially available from Southern Clay Products, its platelets having a thickness of 0. 001 micrometers (10 angstroms) and a size in the planar direction of 0.15 to 0.20 micrometers.

Swellable nanoclays may also be used in the compositions to disperse carbon nanotubes. Useful swellable layered materials include phyllosilicates. Examples of such materials are smectite clay minerals such as montmorillonite, nontronite, beidellite, volkonskoite, hectorite, saponite, sauconite, magadiite, kenyaite, vermiculite, or the like of combinations comprising at least one of the foregoing swellable nanoclays. Other useful layered materials include illite minerals such as ledikite and admixtures of illites with the clay minerals named above.

POSS of the generic formula (RSiO_{1.5})ₙ, wherein R is a hydrocarbon and n is 6, 8, 10, 12, or higher may also be used in the compositions. These molecules have rigid, thermally stable silicon-oxygen frameworks with an oxygen to silicon ratio of 1.5, and covalently-bound hydrocarbon groups that provide an organic outer layer comprising, for example, phenyl, isooctyl, cyclohexyl, cyclopentyl, isobutyl, or other groups. Such silsesquioxanes include, for example, dodecaphenyl-POSS, octaisooctyl-POSS, octacyclohexyl-POSS, octacyclopentyl-POSS, octaisobutyl-POSS and the like. POSS typically have surface areas greater than 400 square meters per gram (m²/gm).

Highly crosslinked silicone nanosized agents having smooth surfaces may also behave as molecular ball bearings and thereby facilitate the dispersion of the carbon nanotubes. These nanosized agents are generally monodispersed in size and are derived from the hydrolysis and condensation of alkyl alkoxy-silanes. These silicon nanosized agents are generally intermediate between inorganic and organic particles and have a 3-dimensional network structure. Without being limited by theory, it is believed that the molecular ball bearings when lodged in the interstices of a carbon nanotube agglomerate or cluster can facilitate a lowering of the friction between the carbon nanotubes and thus reduce the stresses used in disentangling and dispersion of the nanotubes. Suitable examples of highly crosslinked silicone nanosized agents are TOSPEARL^{®} particles manufactured by GE Silicones. TOSPEARL^{®} particles display good hot slip properties, good anti-block properties and have a low influence on optical properties. These TOSPEARL^{®} nanosized particles generally have an average size of 300 nm to 1500 nm. Within this range, it is generally desirable to have an average particle size of greater than or equal to 400 and preferably greater than or equal to 500 nm. Also desirable within this range is an average particle size of less than or equal to 1100 nm and more preferably less than or equal to 800 nm.

It is generally desirable to add the nanosized dispersion agents in amounts of 0.01 to 20 wt% based on the total weight of the composition. Within this range it is generally desirable to use the nanosized dispersion agents in amounts of greater than or equal to 0.5, preferably greater than or equal to 0.7, and more preferably greater than or equal to 1.0 wt% based on the total weight of the composition. Also desirable is an amount of less than or equal to 15, preferably less than or equal to 10, and more preferably less than or equal to 5 wt% based on the total weight of the composition.

Nanosized dispersion agents may also be used in the compositions in masterbatch form if desired. As defined herein, as masterbatch is generally a composition comprising the nanosized dispersion agent and a binder. The binder may be a polymer, homopolymer, monomer, or any other material that may suitably bind the nanosized dispersion agent such that it may be formed into a desired usable shape such as a pellet, strand, briquette, sheet, block, brick, or the like. When a nanosized dispersion agent is used in masterbatch form, the nanosized dispersion agent may be present in the masterbatch in an amount of 1 to 50 wt%. Within this range, it is generally desirable to use nanosized dispersion agents in an amount of greater than or equal to 1.5 wt%, preferably greater or equal to 2wt%, more preferably greater than or equal to 2.5 wt% of the total weight of the masterbatch. Also desirable are nanosized dispersion agents in an amount of less than or equal to 30 wt%, preferably less than or equal to 10 wt%, more preferably less than or equal to 5 wt% of the total weight of the masterbatch. It may also be desirable to use a masterbatch comprising both carbon nanotubes and the nanosized dispersing agents.

The polymeric resin together with the nanosized dispersion agents, carbon nanotubes and any other optionally desired conductive fillers such as the carbon black, solid metallic and non-metallic conductive filler particles may generally be processed in several different ways such as, but not limited to melt blending, solution blending, or the like, or combinations comprising at least one of the foregoing methods of blending. Melt blending of the composition involves the use of shear force, extensional force, compressive force, ultrasonic energy, electromagnetic energy, thermal energy or combinations comprising at least one of the foregoing forces or forms of energy and is conducted in processing equipment wherein the aforementioned forces are exerted by a single screw, multiple screws, intermeshing co-rotating or counter rotating screws, non-intermeshing co-rotating or counter rotating screws, reciprocating screws, screws with pins, screws with screens, barrels with pins, rolls, rams, helical rotors, or combinations comprising at least one of the foregoing.

Melt blending involving the aforementioned forces may be conducted in machines such as, but not limited to single or multiple screw extruders, Buss kneader, Henschel, helicones, Ross mixer, Banbury, roll mills, molding machines such as injection molding machines, vacuum forming machines, blow molding machine, or then like, or combinations comprising at least one of the foregoing machines.

In one embodiment, the polymeric resin in powder form, pellet form, sheet form, or the like, may be first dry blended with the nanosized dispersion agents, carbon nanotubes and other optional fillers if desired in a Henschel or a roll mill, prior to being fed into a melt blending device such as an extruder or Buss kneader. While it is generally desirable for the shear forces in the melt blending device to generally cause a dispersion of the carbon nanotubes and /or the nanosized dispersion agents in the polymeric resin, it is also desired to preserve the aspect ratio of the carbon nanotubes during the melt blending process. In order to do so, it may be desirable to introduce the carbon nanotubes into the melt blending device in the form of a masterbatch. In such a process, the masterbatch may be introduced into the melt blending device downstream of the polymeric resin. As stated above, the nanosized dispersions agents may also be added to the composition in the form of a masterbatch if desired or alternatively, a masterbatch comprising both the carbon nanotubes and the nanosized dispersion agents may be used if desired.

A melt blend is one where at least a portion of the polymeric resin has reached a temperature greater than or equal to about the melting temperature, if the resin is a semi-crystalline polymeric resin, or the flow point (e.g., the glass transition temperature) if the resin is an amorphous resin during the blending process. A dry blend is one where the entire mass of polymeric resin is at a temperature less than or equal to about the melting temperature if the resin is a semi-crystalline polymeric resin, or at a temperature less than or equal to the flow point if the polymeric resin is an amorphous resin and wherein polymeric resin is substantially free of any liquid-like fluid during the blending process. A solution blend, as defined herein, is one where the polymeric resin is suspended in a liquid-like fluid such as, for example, a solvent or a non-solvent during the blending process.

When a masterbatch is used, the carbon nanotubes may be present in the masterbatch in an amount of 1 to 50 wt%. Within this range, it is generally desirable to use carbon nanotubes in an amount of greater than or equal to 1.5 wt%, preferably greater or equal to 2wt%, more preferably greater than or equal to 2.5 wt% of the total weight of the masterbatch. Also desirable are carbon nanotubes in an amount of less than or equal to 30 wt%, preferably less than or equal to 10 wt%, more preferably less than or equal to 5 wt% of the total weight of the masterbatch. In one embodiment pertaining to the use of masterbatches, while the masterbatch containing the carbon nanotubes may not have a measurable bulk or surface resistivity either when extruded in the form of a strand or molded into the form of dogbone, the resulting composition into which the masterbatch is incorporated has a measurable bulk or surface resistivity, even though the weight fraction of the carbon nanotubes in the composition is lower than that in the masterbatch. It is preferable for the polymeric resin in such a masterbatch to be semi-crystalline. Examples of semi-crystalline polymeric resins which display these characteristics and which may be used in masterbatches are polypropylene, polyamides, polyesters, or the like, or combinations comprising at least on of the foregoing semi-crystalline polymeric resins.

In another embodiment relating to the use of masterbatches in the manufacture of the composition, it is sometimes desirable to have the masterbatch comprising a polymeric resin that is the same as the polymeric resin that forms the continuous phase of the composition. This feature permits the use of substantially smaller proportions of the SWNTs, since only the continuous phase carries the SWNTs that provide the composition with the requisite volume and surface resistivity. In yet another embodiment relating to the use of masterbatches in polymeric blends, it may be desirable to have the masterbatch comprising a polymeric resin that is different in chemistry from other the polymeric that are used in the composition. In this case, the polymeric resin of the masterbatch will form the continuous phase in the blend.

The composition comprising the polymeric resin, nanosized dispersion aids and the carbon nanotubes may be subject to multiple blending and forming steps if desirable. For example, the composition may first be extruded and formed into pellets. The pellets may then be fed into a molding machine where it may be formed into other desirable shapes such as housing for computers, automotive panels that can be electrostatically painted, or the like. Alternatively, the composition emanating from a single melt blender may be formed into sheets or strands and subjected to post-extrusion processes such as annealing, uniaxial or biaxial orientation.

In one embodiment involving the use of post-processing, the melt blended composition is further subjected to ultradrawing in the unaxial direction utilizing draw ratios of 2 to 1,000,000. The high ultradraw ratios generally facilitates the formation of shish-kebab semi-crystalline structures, which may contain carbon nanotubes in the amorphous regions. In another embodiment, the composition is further stressed uniaxially or biaxially to produce a film having a thickness of 0.01 micrometers to 5000 micrometers. If the film comprises a semi-crystalline polymeric resin, it is generally desirable for the oriented film to have crystals oriented in the azimuthal direction of θ = 0 degrees to θ = 80 degrees. In yet another embodiment related to post-processing after melt blending, the composition is supercooled to a temperature of 1°C to 100°C below the melting point after the blending for a time period of 2 minutes to 2 hours. The supercooled compositions may generally have macroscopic semi-crystalline structures such as spherulites, which comprise carbon nanotubes.

In semi-crystalline polymers, the carbon nanotubes may behave as nucleating agents. In order to improve the strength of the composition, it may be desirable to have the crystallites nucleate on the carbon nanotubes. In general it is desirable to have at least 1 wt%, preferably at least 10 wt%, and more preferably at least 15 wt% of the crystallites nucleate on the carbon nanotubes.

Solution blending may also be used to manufacture the composition. The solution blending may also use additional energy such as shear, compression, ultrasonic vibration, or the like to promote homogenization of the carbon nanotubes and the nanosized dispersion agent with the polymeric resin. In one embodiment, a polymeric resin suspended in a fluid may be introduced into an ultrasonic sonicator along with the carbon nanotubes and/or the nanosized dispersion agents. The mixture may be solution blended by sonication for a time period effective to disperse the carbon nanotubes and/or the nanosized dispersion agents onto the polymeric resin particles. The polymeric resin along with the carbon nanotubes may then be dried, extruded and molded if desired. It is generally desirable for the fluid to swell the polymeric resin during the process of sonication. Swelling the polymeric resin generally improves the ability of the carbon nanotubes to impregnate the polymeric resin during the solution blending process and consequently improves dispersion.

In another embodiment related to solution blending, the carbon nanotubes and/or the nanosized dispersion agents are sonicated together with polymeric resin precursors. Polymeric resin precursors are generally monomers, dimers, trimers, or the like, which can be reacted into polymeric resins. A fluid such as a solvent may optionally be introduced into the sonicator with the carbon nanotubes and/or the nanosized dispersion agents and the polymeric resin precursor. The time period for the sonication is generally an amount effective to promote encapsulation of the carbon nanotubes and /or the nanosized dispersion agents by the polymeric resin precursor. After the encapsulation, the polymeric resin precursor is then polymerized to form a polymeric resin within which is dispersed the carbon nanotubes and/or the nanosized dispersion agents. This method of dispersion of the carbon nanotubes and/or the nanosized dispersion agents in the polymeric resin promotes the preservation of the aspect ratios of the carbon nanotubes and/or the nanosized dispersion agents, which therefore permits the composition to develop electrical conductivity at lower loading of the carbon nanotubes and /or the nanosized dispersion agents.

Suitable examples of monomers that may be used to facilitate this method of encapsulation and dispersion are those used in the synthesis of thermoplastic resins such as, but not limited to polyacetals, polyacrylics, polycarbonates, polystyrenes, polyesters, polyamides, polyamideimides, polyarylates, polyurethanes, polyarylsulfones, polyethersulfones, polyarylene sulfides, polyvinyl chlorides, polysulfones, polyetherimides, polytetrafluoroethylenes, polyetherketones, polyether etherketones, or the like. In general, it is desirable to sonicate the mixture of polymeric resin, polymeric resin precursor, fluid and/or the carbon nanotubes and /or the nanosized dispersion agents for a period of 1 minute to 24 hours. Within this range, it is desirable to sonicate the mixture for a period of greater than or equal to 5 minutes, preferably greater than or equal to 10 minutes and more preferably greater than or equal to 15 minutes. Also desirable within this range is a time period of less than or equal to 15 hours, preferably less than or equal to 10 hours, and more preferably less than or equal to 5 hours.

The compositions described above may be used in a wide variety of commercial applications. They may be advantageously utilized as films for packaging electronic components such as computers, electronic goods, semi-conductor components, circuit boards, or the like which need to be protected from electrostatic dissipation. They may also be used internally inside computers and other electronic goods to provide electromagnetic shielding to personnel and other electronics located outside the computer as well as to protect internal computer components from other eternal electromagnetic interference. They may also be used advantageously in automotive body panels both for interior and exterior components of automobiles that can be electrostatically painted if desired.

The following examples, which are meant to be exemplary, not limiting, illustrate compositions and methods of manufacturing of some of the various embodiments of the electrically conductive compositions described herein.

### EXAMPLE 1

This experiment was undertaken to demonstrate effectiveness of the nanosized dispersing agents in facilitating the dispersion of carbon nanotubes in a polycarbonate resin. In this example, various nanosized dispersion aids listed in Table 1 were mixed with polycarbonate powder and 1 wt% of single wall carbon nanotubes obtained from Carbon Nanotechnologies Incorporated. The polycarbonate powder, the carbon nanotubes and the nanosized dispersion agents were dry blended together in a glass weighing dish and extruded through a DACA mini-extruder to form a strand. The DACA mini twin screw extruder has a maximum mixing volume of 5 cubic centimeters and has a screw speed of from 10 to 360 rpm which is digitally controllable in 1 rpm increments. The strands from the extruder were used to make conductivity measurements. The strands were fractured under liquid nitrogen to ensure a clean break, the ends were painted with a silver conductive paint, and the resistance was measured with a Fluke multimeter.

**Table 1**

| Sample # | Nanosized Dispersion Agent | Manufacturer | Wt% |
|---|---|---|---|
| 1 | Aluminum Oxide | NanoActive | 1 |
| 2 | Magnesium Oxide | NanoActive | 1 |
| 3 | Copper Oxide | NanoActive | 1 |
| 4 | Zinc Oxide | NanoActive | 1 |
| 5 | Calcium Oxide | NanoActive | 1 |
| 6 | Titanium (IV) Oxide (TiO₂) | NanoActive | 1 |
| 7 | Nanoclays | Nanocor | 1 |
| 8 | Nanosil (SiO₂) | US Global Aerospace | 1 |
| 9 | Titanium oxide (TiO₂) (regular) | DuPont | 1 |

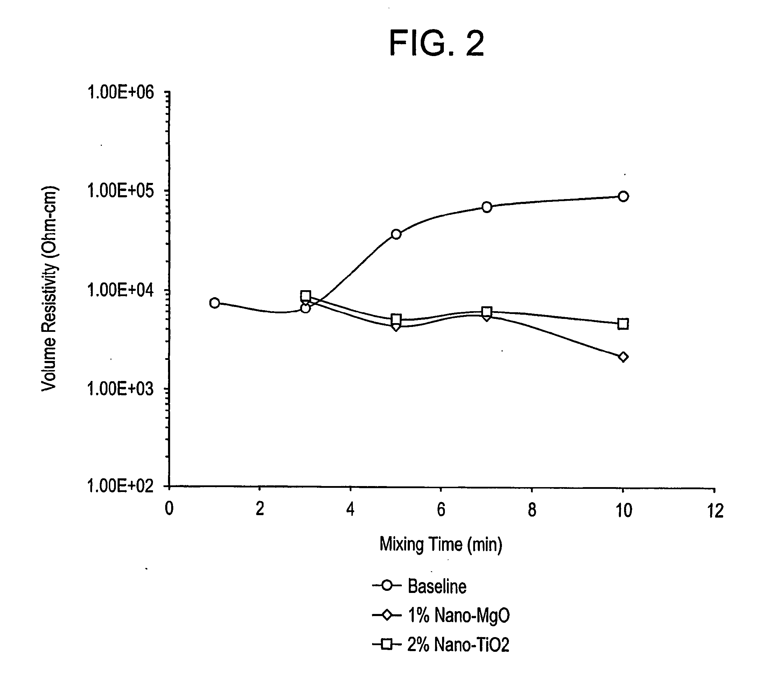

Specific volume resistivity was measured on at least five samples for each composition. While the nanosized particles of aluminum oxide, copper oxide, zinc oxide, calcium oxide and the nanoclays produced no changes in the measured volume resistivity, Figure 2 shows reductions in the specific volume resistivity for samples containing magnesium oxide and titanium oxide when subjected to mixing for different time intervals. The figure details the specific volume resistivity versus the time of mixing for polycarbonate samples containing only 1 wt% carbon nanotubes. The figure also details the specific volume resistivity for samples containing polycarbonate and having 1 wt% carbon nanotubes as well either 1 wt% of nanosized magnesium oxide (MgO) as well as 2 wt% nanosized titanium dioxide (TiO₂). All weight percents are based on the total composition. From the figure it may be seen that for the sample containing only the single wall carbon nanotubes and no nanosized dispersion agent, the specific volume resistivity increases with mixing time. Without being limited by theory, it is believed that the increase in resistivity is due to a decrease in the aspect ratio of the carbon nanotubes as a result of the shear forces in the extruder. The samples having the dispersion agent on the other hand, show a fairly consistent and constant volume resistivity with increased mixing time.

### EXAMPLE 2

This example was conducted to demonstrate the effect of nanosized dispersion agents versus chemically similar agents, which are not nanosized. The non-nanosized agents are called regular agents. The composition for all samples was polycarbonate containing 1 wt% single wall carbon nanotubes and the dispersion agents as shown in Table 2. Table 2 also shows the specific resistivity results for polycarbonate samples having 1 wt% single wall carbon nanotubes and containing either 1 wt% nanosized magnesium oxide or 1 wt% regular magnesium oxide. Resistivity results are also shown for polycarbonate samples having 1 wt% carbon nanotubes containing 2 wt% nanosized titanium dioxide and 2 wt% regular titanium dioxide. The regular titanium dioxide is R10315 commercially available from DuPont having particle size of about 5 micrometers. The individual particles generally agglomerate into clusters having sizes of about 30 to about 150 micrometers and these agglomerates can only be broken down by the application of shear such as, for example, in an extruder.

**Table 2**

| Time of mixing | SVR (ohm-cm) at 1 wt% SWNT | SVR (ohm-cm) at 1 wt% SWNT + 1 wt% nanosized MgO | SVR (ohm-cm) at 1 wt% SWNT + 1 wt% regular MgO | SVR (ohm-cm) at 1 wt% SWNT + 1 wt% nanosized TiO₂ | SVR (ohm-cm) at 1 wt% SWNT + 2 wt% regular TiO₂ |
|---|---|---|---|---|---|
| 1 | 7353 | --- | --- | --- | --- |
| 3 | 6550 | 7861 | --- | 8742 | --- |
| 5 | 37918 | 4322 | --- | 5077 | --- |
| 7 | 70782 | 5492 | --- | 6157 | --- |
| 10 | 91215 | 2195 | --- | 4682 | --- |

From the table it can be seen that the nanosized particles reduce the volume resistivity dramatically, while the regular sized particles have a detrimental effect on the volume resistivity, i.e., there is no measurable conductivity for these samples.

## Claims

1. An electrically conductive composition comprising:
a polymeric resin;
an electrically non-conducting nanosized dispersion agent; and
carbon nanotubes, wherein the composition has an electrical volume resistivity less than or equal to 10⁸ ohm-cm, and a notched Izod impact strength greater than or equal to 5 kilojoules/square meter.

2. The composition of Claim 1, wherein the carbon nanotubes are single wall carbon nanotubes, multiwall carbon nanotubes, vapor grown carbon fibers or a combination comprising at least one of the foregoing types of carbon nanotubes.

3. The composition of Claim 1, wherein the carbon nanotubes exist in the form of ropes of at least 10 carbon nanotubes prior to processing.

4. The composition of Claim 2, wherein the single wall carbon nanotubes comprise up to 80 wt% impurities, wherein the impurities are iron, iron oxide, yttrium, cadmium, nickel, cobalt, copper, soot, amorphous carbon, multi-wall carbon nanotubes, or a combination comprising at least one of the foregoing impurities.

5. The composition of Claim 1, wherein the polymeric resin is a blend of polymers, a copolymer a terpolymer or a combination comprising at least one of the foregoing polymeric resins and wherein the polymeric resin has a phase separated morphology and wherein a substantial proportion of the carbon nanotubes are present in a single phase of the blend.

6. The composition of Claim 1, wherein the carbon nanotubes are derivatized with functional groups.

7. The composition of Claim 1, wherein the nanosized dispersion agents are metal oxides, polyhedral oligomeric silsesquioxanes macromers, highly crosslinked silicone nanosized agents, metal carbides, nanoclays having an average particle size of less than or equal to 1200 nanometers.

8. The composition of Claim 1, wherein the nanosized dispersion agent is a metal oxide of an alkali earth metal, an alkaline earth metal, a transition metal or a combination comprising at least one of the foregoing metal oxides.

9. A method for manufacturing a composition comprising:
blending a polymeric resin, an electrically non-conducting nanosized dispersion agent and carbon nanotubes, wherein the composition has an electrical volume resistivity less than or equal to 10⁸ ohm-cm, and a notched Izod impact strength greater than or equal to 5 kilojoules/square meter.

10. The method of Claim 9, wherein the blending comprises melt blending, solution blending or combinations comprising at least one of the foregoing methods of blending.

11. The method of Claim 9, wherein the polymeric resin is synthesized from monomers, dimers, trimers or a combination comprising at least one of the foregoing monomers dimers or trimers during the process of blending.

12. The method of Claim 9, wherein the carbon nanotubes are sonicated in the presence of the monomer prior to the polymerization of the polymer.

13. The method of Claim 9, wherein the blending involves the use of shear force, extensional force, compressive force, ultrasonic energy, electromagnetic energy, thermal energy or combinations comprising at least one of the foregoing forces and energies and is conducted in processing equipment wherein the aforementioned forces are exerted by a single screw, multiple screws, intermeshing co-rotating or counter rotating screws, non-intermeshing co-rotating or counter rotating screws, reciprocating screws, screws with pins, barrels with pins, screen packs, rolls, rams, helical rotors, or combinations comprising at least one of the foregoing.

14. An article manufactured from the composition of Claim 1.

15. An article manufactured by the method of Claim 9.

## Patentansprüche

1. Elektrisch leitende Zusammensetzung, umfassend:
ein Polymerharz;
ein elektrisch nicht leitendes nanogroßes Dispersionsmittel; und
Kohlenstoffnanoröhren,
wobei die Zusammensetzung einen spezifischen elektrischen Volumenwiderstand von weniger als oder gleich 10⁸ Ohm-cm und eine Izod-Kerbschlagzähigkeit von mehr als oder gleich 5 Kilojoule/Quadratmeter aufweist.

2. Zusammensetzung nach Anspruch 1, wobei die Kohlenstoffnanoröhren einwandige Kohlenstoffnanoröhren, mehrwandige Kohlenstoffnanoröhren, in Dampf gewachsene Kohlenstofffasern oder eine mindestens einen der vorstehenden Kohlenstoffnanoröhrentypen umfassende Kombination ist.

3. Zusammensetzung nach Anspruch 1, wobei die Kohlenstoffnanoröhren vor der Verarbeitung in Form von Strängen aus mindestens 10 Kohlenstoffnanoröhren vorliegen.

4. Zusammensetzung nach Anspruch 2, wobei die einwandigen Kohlenstoffnanoröhren bis zu etwa 80 Gew.-% Verunreinigungen umfassen, wobei es sich bei den Verunreinigungen um Eisen, Eisenoxide, Yttrium, Cadmium, Nickel, Cobalt, Kupfer, Ruß, amorphen Kohlenstoff, mehrwandige Kohlenstoffnanoröhren oder eine mindestens eine der vorstehenden Verunreinigungen umfassende Kombination handelt.

5. Zusammensetzung nach Anspruch 1, wobei das Polymerharz eine Mischung von Polymeren, ein Copolymer, ein Terpolymer oder eine mindestens eines der vorstehenden Polymerharze umfassende Kombination ist und wobei das Polymerharz eine phasengetrennte Morphologie aufweist und wobei ein wesentlicher Anteil der Kohlenstoffnanoröhren in einer einzelnen Phase der Mischung vorliegt.

6. Zusammensetzung nach Anspruch 1, wobei die Kohlenstoffnanoröhren mit funktionellen Gruppen derivatisiert sind.

7. Zusammensetzung nach Anspruch 1, wobei die nanogroßen Dispersionsmittel Metalloxide, polyedrische oligomere Silsequioxanmakromere, hochvernetzte nanogroße Siliconmittel, Metallcarbide, Nanotone mit einer mittleren Teilchengröße von weniger als oder gleich 1200 Nanometern sind.

8. Zusammensetzung nach Anspruch 1, wobei das nanogroße Dispersionsmittel ein Metalloxid eines Erdalkalimetalls, eines alkalischen Erdmetalls, eines Übergangsmetalls oder einer mindestens eines der vorstehenden Metalloxide umfassenden Kombination ist.

9. Verfahren zur Herstellung einer Zusammensetzung, umfassend:
Mischen eines Polymerharzes, eines elektrisch nicht leitenden nanogroßen Dispersionsmittels und von Kohlenstoffnanoröhren, wobei die Zusammensetzung einen spezifischen elektrischen Volumenwiderstand von weniger als oder gleich 10⁸ Ohm-cm und eine Izod-Kerbschlagzähigkeit von mehr als oder gleich 5 Kilojoule/Quadratmeter aufweist.

10. Verfahren nach Anspruch 9, wobei das Mischen Schmelzmischen, Lösungsmischen oder eine mindestens eines der vorstehenden Mischverfahren umfassende Kombination umfasst.

11. Verfahren nach Anspruch 9, wobei das Polymerharz aus Monomeren, Dimeren, Trimeren oder einer mindestens eines der vorstehenden Monomere, Dimere oder Trimere umfassenden Kombination während des Mischverfahrens synthetisiert wird.

12. Verfahren nach Anspruch 9, wobei die Kohlenstoffnanoröhren in Gegenwart des Monomers vor der Polymerisation des Polymers mit Ultraschall behandelt werden.

13. Verfahren nach Anspruch 9, wobei das Mischen die Verwendung von Scherkraft, Dehnungskraft, Kompressionskraft, Ultraschallenergie, elektromagnetischer Energie, Wärmeenergie oder einer mindestens eine der vorstehenden Kräfte und Energien umfassenden Kombination beinhaltet und in einer Verarbeitungsapparatur durchgeführt wird, in welcher die vorstehend erwähnten Kräfte durch eine Einzelschnecke, mehrere Schnecken, kämmende gleich drehende oder gegeneinander drehende Schnecken, nicht-kämmende gleich drehende oder gegeneinander drehende Schnecken, sich hin- und her bewegende Schnecken, Schnecken mit Stiften, Zylindern mit Stiften, Siebwechslern, Walzen, Stempeln, Schraubenrotoren oder eine mindestens eines von Vorstehendem umfassenden Kombination ausgeübt werden.

14. Gegenstand, der aus der Zusammensetzung von Anspruch 1 hergestellt ist.

15. Gegenstand, der durch das Verfahren von Anspruch 9 hergestellt ist.

## Revendications

1. Composition électriquement conductrice comprenant:
une résine polymère ;
un agent de dispersion électriquement non conducteur de la taille du nanomètre ; et
des nanotubes de carbone, où la composition a une résistivité électrique volumique inférieure ou égale à 10⁸ ohm-cm et une résistance Izod au choc sur barreau entaillé supérieure ou égale à 5 kilojoules/mètre carré.

2. Composition selon la revendication 1, dans laquelle les nanotubes de carbone sont des nanotubes de carbone à paroi simple, des nanotubes de carbone à parois multiples, des fibres de carbone obtenues crues par vapeur ou une combinaison comprenant au moins un des types susdits de nanotubes de carbone.

3. Composition selon la revendication 1, dans laquelle les nanotubes de carbone existent sous la forme de cordes d'au moins 10 nanotubes de carbone avant traitement.

4. Composition selon la revendication 2, dans laquelle les nanotubes de carbone à paroi simple comprennent jusqu'à 80% en poids d'impuretés, dans laquelle les impuretés sont du fer, des oxydes de fer, de l'yttrium, du cadmium, du nickel, du cobalt, du cuivre, de la suie, du carbone amorphe, des nanotubes de carbone à parois multiples, ou une combinaison comprenant au moins une des impuretés susdites.

5. Composition selon la revendication 1, dans laquelle la résine polymère est un mélange de polymères, un copolymère, un terpolymère ou une combinaison comprenant au moins une des résines polymères susdites et dans laquelle la résine polymère a une morphologie à séparation de phases et dans laquelle une proportion sensible des nanotubes de carbone sont présents dans une seule phase du mélange.

6. Composition selon la revendication 1, dans laquelle les nanotubes de carbone sont dérivés avec des groupes fonctionnels.

7. Composition selon la revendication 1, dans laquelle les agents de dispersion de la taille du nanomètre sont des oxydes métalliques, des macromères silsesquioxanes oligomères polyédriques, des agents de la taille du nanomètre à base de silicone hautement réticulés, des carbures métalliques, des nanoargiles ayant une granulométrie moyenne inférieure ou égale à 1200 nanomètres.

8. Composition selon la revendication 1, dans laquelle l'agent de dispersion de la taille du nanomètre est un oxyde métallique d'un métal alcalin terreux, d'un métal alcalino-terreux, d'un métal de transition ou d'une combinaison comprenant au moins un des oxydes métalliques susdits.

9. Procédé de fabrication d'une composition comprenant l'étape consistant à:
mélanger une résine polymère, un agent de dispersion de la taille du nanomètre électriquement non conducteur et des nanotubes de carbone, dans lequel la composition a une résistivité électrique volumique inférieure ou égale à environ 10⁸ ohm-cm, et une résistante Izod au choc sur barreau entaillé supérieure ou égale à 5 kilojoules/mètre carré.

10. Procédé selon la revendication 9, dans lequel l'étape de mélange comprend des étapes de mélange en fusion, de mélange en solution ou des combinaisons comprenant au moins un des procédés de mélanges susdits.

11. Procédé selon la revendication 9, dans lequel la résine polymère est synthétisée à partir de monomères, de dimères, de trimères ou une combinaison comprenant au moins un parmi les monomères, dimères ou trimères susdits au cours du processus de mélange.

12. Procédé selon la revendication 9, dans lequel les nanotubes de carbone sont ultrasoniqués en présence du monomère avant la polymérisation du polymère.

13. Procédé selon la revendication 9, dans lequel l'étape de mélange implique l'utilisation d'une force de cisaillement, d'une force d'extension, d'une force de compression, d'une énergie ultrasonore, d'une énergie électromagnétique, d'une énergie thermique ou de combinaisons comprenant au moins une des forces et énergies susdites et est conduite dans un équipement de traitement dans lequel les forces susmentionnées sont exercées par une vis unique, de multiples vis, des vis engrenantes en co-rotation ou contrarotatives, des vis non engrenantes en co-rotation ou contrarotatives ou des vis-piston, des vis à axes, des barillets à axes, des filtres, des rouleaux, des pistons, des rotors hélicoïdaux, ou des combinaisons comprenant au moins un des éléments susdits.

14. Article fabriqué à partir de la composition selon la revendication 1.

15. Article fabriqué par le procédé selon la revendication 9.
